# EUROPÄISCHE PATENTSCHRIFT

(11) **EP 3 246 197 B1**
(45) Veröffentlichungstag und Bekanntmachung des Hinweises auf die Patenterteilung: **01.04.2020**
(21) Anmeldenummer: 17166729.8
(22) Anmeldetag: 18.04.2017
(51) Int. Cl.: B62K 19/30, B62M 6/90

(54) **RAHMEN FÜR EIN MIT MUSKELKRAFT ANZUTREIBENDES LANDFAHRZEUG, DAS IN EINEM RAHMENABSCHNITT BAUTEILE ZUMINDEST EINES HILFSANTRIEBS AUFGENOMMEN HAT**
FRAME FOR AN AGRICULTURAL VEHICLE TO BE DRIVEN BY MUSCLE POWER, HOLDING COMPONENTS OF AT LEAST ONE AUXILIARY DRIVE IN A FRAME SECTION
CHÂSSIS POUR VÉHICULE AGRICOLE FONCTIONNANT À LA FORCE MUSCULAIRE LOGEANT DANS UNE SECTION DU CHÂSSIS DES ÉLÉMENTS CONSTITUTIFS D'AU MOINS UN ENTRAÎNEMENT AUXILIAIRE

(30) Priorität: 10.05.2016 DE 202016002960 U
(43) Veröffentlichungstag der Anmeldung: 22.11.2017
(73) Patentinhaber: Derby Cycle Werke GmbH, 49661 Cloppenburg (DE)
(72) Erfinder: Pöss, Mario, 70176 Stuttgart (DE)
(74) Vertreter: Jabbusch, Matthias

(56) Entgegenhaltungen:
- WO-A1-2014/063593
- WO-A1-2015/051472
- CN-A- 102 897 261
- JP-A- H06 227 474
- JP-A- H10 297 570
- JP-A- 2001 106 162
- US-A1- 2012 006 154

## Beschreibung

Die Erfindung betrifft einen Rahmen für ein mit Muskelkraft anzutreibendes Landfahrzeug, das in einem Rahmenabschnitt Bauteile zumindest eines Hilfsantriebs aufgenommen hat.

Mit Muskelkraft angetriebene Landfahrzeuge sind beispielsweise zweirädrige bzw. vierrädrige Fahrzeuge, auf denen aufsitzende Personen über Pedale Kräfte aufbringen, die auf einzelne Räder übertragen werden. Neben der Muskelkraft sind insbesondere für Zweiräder Hilfsantriebe entwickelt worden, die in jüngerer Zeit regelmäßig elektrische Hilfsantriebe sind.

Für elektrische Hilfsantriebe bei sogenannten Pedelec-Fahrrädern oder E-Bike-Fahrrädern oder auch bei entsprechenden dreirädrigen oder vierrädrigen Pedelec- bzw. E-Bike-Gefährten sind neben den einzelnen Antriebskomponenten regelmäßig Akkumulatoren aufzunehmen.

Hinsichtlich dieser Akkumulatoren geht eine Entwicklung dahin, diese in Rahmenabschnitten des Landfahrzeuges aufzunehmen. Als Rahmenabschnitte dienen beispielsweise Oberrohre oder auch Unterrohre, in die Akkumulatoren z. B. hineingeschoben werden. Das Anordnen der Akkumulatoren in einem Rahmenrohr hat den Vorteil, dass diese von außen nicht sichtbar sind. Das Landfahrzeug hat dann die Anmutung eines Landfahrzeuges ohne Akkumulatoren. Nachteilig ist, dass die Akkumulatoren innerhalb des Rahmenrohres in einem engen und geschlossenen Bauraum angeordnet sind. Dies kann bei einem Betrieb des Landfahrzeuges und der dabei auftretenden Wärmeentwicklung zu Wärmestaus führen. Die im Rahmen aufgenommenen Bauteile sind regelmäßig in diesem nach der Feuchtigkeitsschutznorm IP55 gekapselt. Die Kapselung ist damit eng, so dass eine vorzeitige Abschaltung des Hilfsantriebes droht, wenn dieser nur geringe Leistung abgibt. Dies tritt insbesondere bei einem Akkumulator mit wenigen Zellen auf. Den Stand der Technik nach dem Oberbegriff des Anspruchs 1 stellt hier die JP 2001 106162 A dar.

Der Erfindung liegt die Aufgabe zugrunde, einen Rahmen der eingangsgenannten Gattung aufzuzeigen, der aufgrund seiner Konstruktion eine Erwärmung der im Rahmenabschnitt aufgenommenen Bauteile verhindert.

Diese Aufgabe ist erfindungsgemäß dadurch gelöst, dass der Rahmen in einem Abschnitt in Fahrzeugfahrrichtung vor der Bauteilaufnahme und in einem Abschnitt in Fahrzeugfahrrichtung nach der Bauteilaufnahme jeweils zumindest einen Durchbruch hat.

Bei dem erfindungsgemäßen Rahmen sind Durchbrüche vorgesehen. Diese Durchbrüche ermöglichen einen Luftaustausch zwischen Rahmeninneren und der Umgebung des Rahmens. Erfindungsgemäß ist vorgesehen, zumindest einen Durchbruch vor der Bauteilaufnahme und somit beispielsweise vor der Aufnahme von elektrischen Akkumulatoren anzuordnen, während zumindest ein anderer Durchbruch in Fahrzeugfahrrichtung nach bzw. hinter der Bauteilaufnahme angeordnet ist. Somit ist es ermöglicht, dass während der Fahrt in den vorderen Durchbruch Luft eintritt und durch den hinteren Durchbruch wieder austritt. Die eingetretene Luft wird im Inneren des Rahmens an den Bauteilen, beispielsweise an den Akkumulatoren, vorbeigeführt und kann Wärme abtransportieren. Auf diese Weise ist eine Luftkühlung für die Bauteile ausgebildet. Mit der erfindungsgemäß hergestellten Belüftung des Akkumulators wird einer Abschaltung des Hilfsantriebes entgegengewirkt.

Nach einer ersten Weiterbildung der Erfindung ist vorgesehen, dass in dem Abschnitt in Fahrzeugfahrrichtung vor der Bauteilaufnahme in einem Rahmenrohr zwei Durchbrüche spiegelbildlich zur vertikalen Längsmittelebene des Rahmenrohrs angeordnet sind. Bei dem Rahmenrohr kann es sich beispielsweise um das Unterrohr eines Fahrradrahmens handeln. Die spiegelbildliche Anordnung der Durchbrüche kann in eine designerische Gestaltung dieses Rahmenrohrs einbezogen werden. Durch zwei Durchbrüche kann zudem eine größere Luftmenge eintreten, diese kann dann auch an zwei Seiten beispielsweise eines Akkumulators an diesem vorbeigeführt werden.

Nach einer nächsten Weiterbildung der Erfindung sind Luftleitelemente vorgesehen, die von außen auf das Rahmenrohr im Bereich der Durchbrüche aufgesetzt sind. Mit diesen Luftleitelementen kann eine größere Menge Luft eingefangen und in die Durchbrüche eingeleitet werden. Dabei können die Luftleitelemente auch gestalterisch ausgebildet werden, sie können beispielsweise aus einem leichten Werkstoff wie Kunststoff hergestellt sein und entsprechende Färbungen oder Ornamente aufweisen.

Ein Durchbruch in Fahrzeugfahrrichtung hinter der Bauteilaufnahme ist beispielsweise im Bereich eines Tretlagers angeordnet, sofern der Rahmen eine entsprechende Tretlageraufnahme hat. Ein Ausführungsbeispiel der Erfindung, aus dem sich weitere erfinderische Merkmale ergeben, ist in der Zeichnung dargestellt. Es zeigen:
- Figur 1:: eine perspektivische Ansicht eines Fahrrades mit einem erfindungsgemäßen Rahmen;
- Figur 2:: eine weitere perspektivische Frontteilansicht des Fahrrades gemäß Figur 1; und
- Figur 3:: eine weitere perspektivische Teilansicht des Fahrrades gemäß Figur 1.

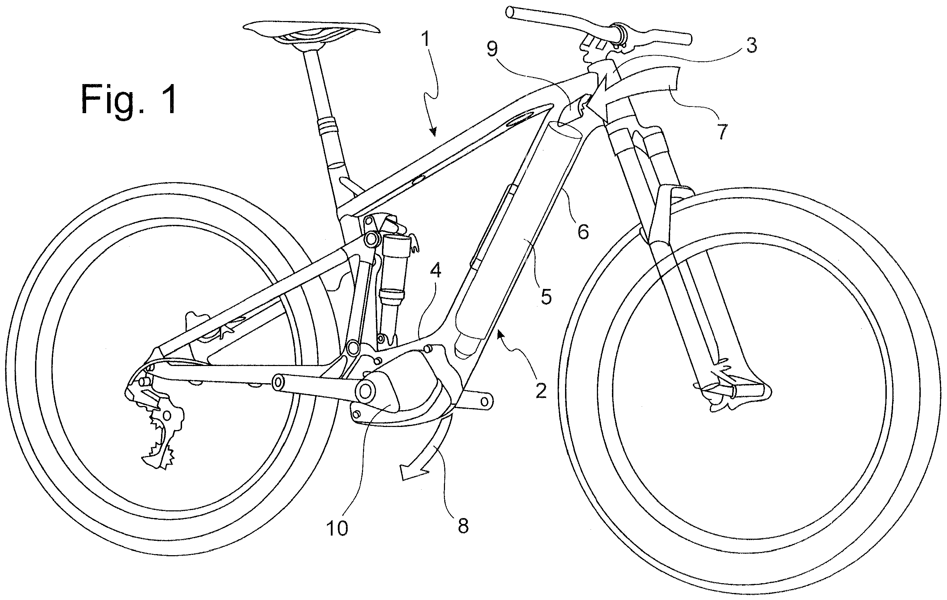

Das Fahrrad in Figur 1 weist einen Rahmen 1 mit verschiedenen Rahmenrohren auf. In einem Unterrohr 2 des Rahmens 1, das zwischen einem Steuerrohr 3 und einer Tretlageraufnahme 4 verläuft, ist ein zusätzliches Bauteil 5 aufgenommen. Der Aufnahme dieses zusätzlichen Bauteils 5 dient eine Bauteilaufnahme 6. Mit einem Pfeil 7 ist der Eintritt von Luft in das Innere des Unterrohrs 2 angedeutet, während mit einem Pfeil 8 der Austritt von Luft aus dem Unterrohr 2 verdeutlicht ist. Das Unterrohr 2 weist in der Nähe des Steuerrohrs 3 Durchbrüche auf. Durch diese Durchbrüche kann Luft und während der Fahrt beschleunigt Fahrluft in das Innere des Unterrohrs 2 eintreten. Dem Durchbruch ist dabei ein Luftleitelement 9 zugeordnet. Die Luft wird durch nachfolgende Fahrluft in das Innere des Unterrohrs 2 gedrückt, sie passiert das aufgenommene Bauteil 5. Wenn dieses Bauteil 5 ein Akkumulator ist und von diesem Bauteil 5 Wärme abgegeben wird, so nimmt die eingetretene Luft diese Wärme mit und führt sie entlang Pfeil 8 aus dem Unterrohr 2 heraus. Dazu ist im Bereich des Tretlagers 10 ein weiterer Durchbruch vorgesehen.

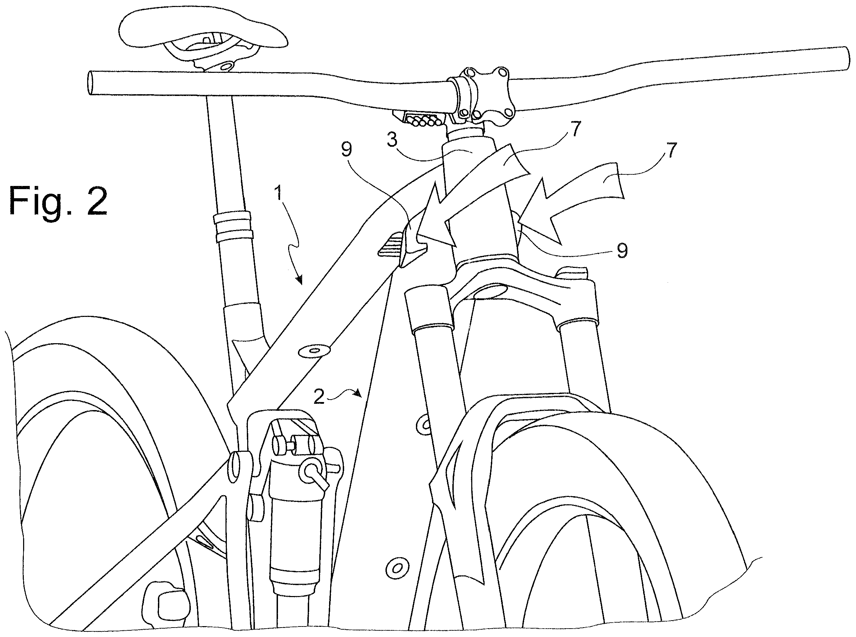

Figur 2 zeigt die den Durchbrüchen im Bereich des Steuerrohrs 3 zugeordneten Luftleitelemente 9. Auf beiden Seiten des Unterrohrs 2 tritt in dieses entlang Pfeilen 7 Luft ein.

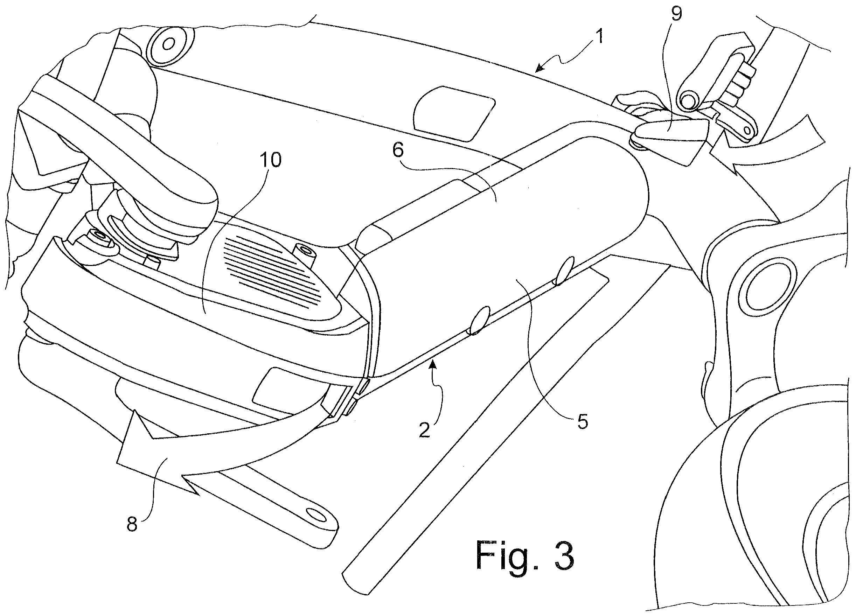

Figur 3 zeigt den Durchbruch im Bereich des Tretlagers 10 durch den entlang Pfeil 8 Luft austritt.

## Patentansprüche

1. Rahmen für ein mit Muskelkraft anzutreibendes Landfahrzeug, das in einem Rahmenabschnitt Bauteile zumindest eines Hilfsantriebes aufgenommen hat, wobei der Rahmen (1) in einem Abschnitt in Fahrzeugfahrrichtung vor der Bauteilaufnahme (6) und in einem Abschnitt in Fahrzeugfahrrichtung nach der Bauteilaufnahme (6) jeweils zumindest einen Durchbruch hat,
**dadurch gekennzeichnet,**
**dass** in einem Abschnitt in Fahrzeugfahrrichtung vor der Bauteilaufnahme (6) in einem Rahmenrohr zwei Durchbrüche spiegelbildlich zur vertikalen Längsmittenebene des Rahmenrohrs angeordnet sind und dass Luftleitelemente (9) vorgesehen sind, die von außen auf das Rahmenrohr im Bereich der Durchbrüche aufgesetzt sind.

2. Rahmen nach Anspruch 1, **dadurch gekennzeichnet, dass** das Rahmenrohr das Unterrohr (2) eines Fahrradrahmens ist.

3. Rahmen nach Anspruch 1 oder 2, **dadurch gekennzeichnet, dass** die Luftleitelemente (9) aus Kunststoff gefertigt sind.

4. Rahmen nach einem der vorhergehenden Ansprüche, **dadurch gekennzeichnet, dass** der Durchbruch in Fahrzeugfahrrichtung hinter der Bauteilaufnahme (6) im Bereich eines Tretlagers (10) angeordnet ist.

## Claims

1. A frame for a land vehicle to be driven using muscular force, which has accommodated components of at least one auxiliary drive in a frame section, wherein the frame (1) has at least one opening in each case in a section upstream of the component mounting (6) in the direction of vehicle travel and in a section downstream of the component mounting (6) in the direction of vehicle travel,
**characterized**
**in that**, in a section upstream of the component mounting (6) in the direction of vehicle travel, two openings are arranged in a frame tube, mirror-symmetrically with respect to the vertical longitudinal central plane of the frame tube and in that air conduction elements (9) are provided, which are placed from the outside onto the frame tube in the region of the openings.

2. The frame according to Claim 1, **characterized in that** the frame tube is the downtube (2) of a bicycle frame.

3. The frame according to Claim 1 or 2, **characterized in that** the air conduction elements (9) are manufactured from plastic.

4. The frame according to one of the preceding claims, **characterized in that** the opening is arranged behind the component mounting (6) in the direction of vehicle travel in the region of a bottom bracket (10).

## Revendications

1. Cadre, destiné à un véhicule terrestre, susceptible d'être entraîné par la force musculaire, qui a réceptionné dans une partie de cadre des composants d'au moins un entraînement auxiliaire, le cadre (1) disposant respectivement d'au moins un ajour dans une partie placée en amont du réceptacle de composants (6) dans la direction de déplacement du véhicule et dans une partie placée en aval du réceptacle de composants (6) dans la direction de déplacement du véhicule,
**caractérisé**
**en ce que** dans une partie placée en amont du réceptacle de composants (6) dans la direction de déplacement du véhicule, dans un tube du cadre, deux ajours sont placés en symétrie spéculaire par rapport au plan médian longitudinal vertical du tube de cadre et **en ce que** des éléments de guidage d'air (9) sont prévus, qui sont posés par l'extérieur sur le tube de cadre, dans la zone des ajours.

2. Cadre selon la revendication 1, **caractérisé en ce que** le tube de cadre est le tube inférieur (2) d'un cadre de bicyclette.

3. Cadre selon la revendication 1 ou 2, **caractérisé en ce que** les éléments de guidage d'air (9) sont fabriqués en matière plastique.

4. Cadre selon l'une quelconque des revendications précédentes, **caractérisé en ce que** l'ajour est placé en aval du réceptacle de composants (6), dans la direction de déplacement du véhicule, dans la zone d'un pédalier (10).
